# EUROPEAN PATENT SPECIFICATION

(11) **EP 1 268 159 B1**
(45) Date of publication and mention of the grant of the patent: **14.01.2004**
(21) Application number: 01917457.2
(22) Date of filing: 07.03.2001
(51) Int. Cl.: B29C 49/00

(54) **A PROCESS AND A MACHINE FOR FORMING CONTAINERS**
VERFAHREN UND VORRICHTUNG ZUR HERSTELLUNG VON BEHÄLTERN
PROCEDE ET MACHINE DESTINES A LA FORMATION DE RECIPIENTS

(30) Priority: 13.03.2000 EP 00830187
(43) Date of publication of application: 02.01.2003
(73) Proprietor: SARONG S.p.A., 42046 Reggiolo (IT)
(72) Inventor: FINETTI, Primo, I-41037 Mirandola (IT)
(74) Representative: Luppi, Luigi
(86) International application number: PCT/IT2001/000112
(87) International publication number: WO 2001/068349

(56) References cited:
- EP-A- 0 719 630
- WO-A-94/08852
- DE-A- 3 141 069

## Description

### Technical Field

Specifically, though not exclusively, the invention can be used for manufacturing plastic bottles.

### Background Art

Special reference is made to a process according to the preamble of claim 1.

A process of this type is known, for example from European publication EP 0 719 630, which describes a process for making plastic bottles with no externally-projecting parts along the weld seams.

This process, however, includes several drawbacks.

Firstly, a pressure internally of the bottle (for example the pressure used to blow the forming fluid during the forming phase, or the crushing pressure applied by the user to force the contents out) tends to cause the reciprocally coupled flaps in the welding area to peel away from each other, with a consequent risk of detachment of the flaps and an undesired opening of the bottle in the welding zone.

Secondly, the area of the bottle which is sheared away after forming exhibits two cutting parts, externally-facing, which can irritate or even hurt the user holding the bottle.

Thirdly, the relationship between the internal capacity and the external volume of the bottle is partially reduced due to the presence along the welding zone of a considerably voluminous seam of material which projects inwardly of the bottle and thus reduces the bottle capacity.

The main aim of the present invention is to provide a process for making containers with no projections in the welding zone, thanks to which it is possible to obviate the abovementioned drawbacks in the prior art.

An advantage of the invention is to make available a process which is relatively rapid and economical.

A further advantage is to make containers having a considerable mechanical resistance, with a small risk of loss through the welded areas on the side walls and on the bottom, without external parts liable to cut users, using a relatively small amount of material which, projecting towards the internal cavity of the container at the welding area, reduces the container capacity only slightly.

A further aim of the invention is to provide a machine which is constructionally simple and economical and able to actuate the process of the invention.

These aims and advantages and more besides are all attained by the present invention, as it is characterised in the appended claims.

### Disclosure of Invention

Further characteristics and advantages of the present invention will better emerge from the detailed description that follows of a preferred but non-exclusive embodiment of the invention, illustrated purely by way of a non-limiting example in the accompanying figures of the drawings, in which:

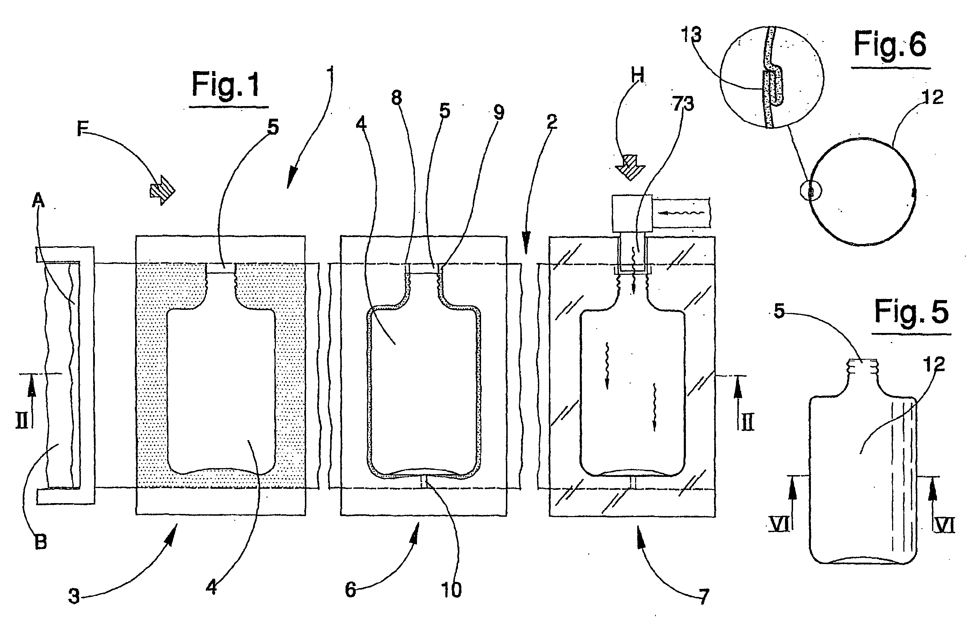

figure 1 is a schematic and partial side view of a machine made according to the invention;
figure 2 is a section made according to line II-II of figure 1;

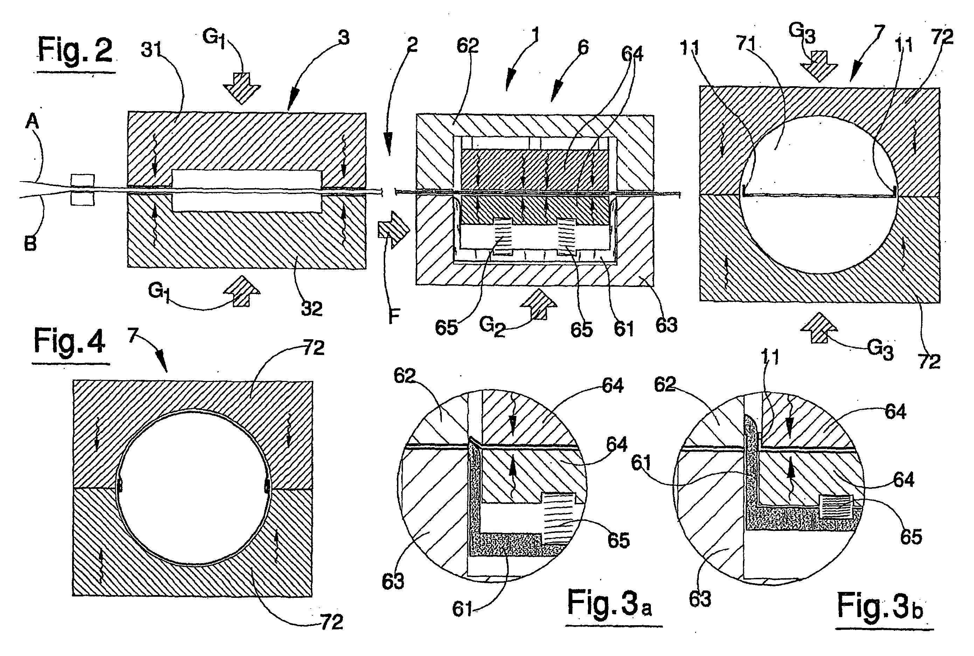

figures 3a and 3b are two consecutive phases of the cutting and folding stage;
figure 4 shows the forming station of figure 2 after the injection of forming fluid;
figure 5 shows a container made with the machine of the invention;
figure 6 is a section made according to line VI-VI of figure 5.

With reference to the above-mentioned figures of the drawings, 1 denotes in its entirety a machine for forming containers in heat-weldable materials.

The machine 1 comprises at least one supply line 2 along which two strips A and B of material advance in the direction indicated by F. The strips A and B face one another and are made of a heat-weldable plastic.

At least one welding station 3 is arranged along the supply line 2, at which the two strips A and B of film are welded at predetermined welding zones, giving rise to cells 4 having at least one opening 5. The welding is done by at least two oppositely-located half-moulds 31 and 32 which are reciprocally mobile on command in direction G1. The welding station 3 comprises a plurality of pairs of oppositely-located half-moulds, so that for each advancement of the strips A and B a plurality of cells 4 are defined. The pairs of half-moulds are arranged side-by-side along advancement direction F of the two strips A and B of film. In the figures, for the sake of simplicity only one pair of half-moulds 31 and 32 is illustrated. The openings 5 of the cells 4 are arranged at a longitudinal edge of the strips. In figure 2 the welded part of the strips of film is represented with a dotted line.

The machine 1 comprises at least one cutting and folding station 6 arranged along the supply line 2 downstream of the welding station 3, in which at least a part of the welding zones surrounding the cells 4 is cut and folded. In figure 2 the cut and folded part is represented in a dotted line.

The cutting and folding station 6 comprises at least one punch 61 which is mobile on command in a direction G2 which is transversal to the advancement direction F. The punch 61 cooperates with an opposite bottom die 62 to cut and fold a welding zone which surrounds, at least in part, at least one cell 4. The punch 61 exhibits a cutting blade which is predisposed to cut the strips of film in the welding zone at a predetermined distance from the internal edge of the welding zone, i.e. the edge which delimits the external profile of a cell 4. The bottom die 62 cooperates with a counter-die 63 to squeeze the strips of film during the punching operation effected by the punch 61. The die 62 and the counter-die 63 can on command be reciprocally neared and distanced.

The cutting and folding station 6 comprises a plurality of punch-die pairs, able to act simultaneously to cut and fold in one operation the welding zones which are around the edges of a plurality of cells 4.

The cutting and folding station 6 also functions as a preheating station which comprises, associated to each punch-die pair 61-62 a pair of oppositely-arranged heating half-moulds 64 which are reciprocally mobile on command in direction G2 and which are predisposed to heat up at least one cell 4. The half-moulds 64 are situated internally of the punch-die pair 61-62. The heating half-moulds 64 also have the task of establishing the strips of film during the cutting and folding action of the punch 61. At least one spring 65 acts between the punch 61 and at least one heating half-mould 64.

Along the supply line 2, downstream of the welding station 3 there is at least one forming station 7 in which a forming fluid is injected into the cells 4, through the openings 5, expanding each cell 4 internally of a respective forming cavity 71. Each forming cavity 71 is made up by at least two opposite half-moulds 72, mobile on command with respect to one another in direction G. A fluid-injecting device is located at the forming station 7 and injects a pressurised forming fluid. The fluid-injecting device is provided with at lest one nozzle 73, mobile on command in both directions H transversal to the advancement direction F. The forming station 7 preferably comprises a plurality of opposing half-mould pairs 72 and a plurality of nozzles 73. Each nozzle 73 is predisposed to insert in a corresponding opening 5 of a cell 4.

The machine described herein below actuates a process for forming containers in heat-weldable material, according to which the two strips A and B are supplied in the advancement direction F and are welded together in predetermined welding zones, creating the cells 4. Each cell 4, after preheating, is inserted in a respective forming cavity 71 and is heat-deformed against the internal walls of the half-moulds 72 which define the forming cavity 71. The heat-deformation is done by injection through the opening 5 in the cell 4 of a forming fluid which causes the cell 4 to expand.

Before injecting the forming fluid, at least a part of the welding zone which surrounds the cell 4 is cut, folded and inserted into the forming cavity 71. The cutting and folding stage is done by advancing the punch 61.

The punch 61 is conformed in such a way that at least a part of the welding zone surrounding the cell 4 is not cut, so as to leave at least one point of connection between the cell 4 and the immediately adjacent cells, i.e. the next cell and the preceding cell. In particular, the punch 61 is conformed in such a way as to leave two connection points 8 and 9 at the cell opening 5, on opposite sides with respect to the opening 5 itself, and at least one connection point 10 at a side of the cell 4 which is opposite to the opening. At least one part of the welding zone surrounding a cell 4 is cut and folded at the same station in which the cell 4 is preheated prior to forming.

The half-moulds 72 which define the forming cavity are closed so that the welded, cut and folded flaps 11 which surround the cell 4 remain inside the forming cavity 71, as illustrated in figure 2. When the forming fluid is blown into the cell 4, the heat-weldable material is blown against the internal walls of the half-moulds 72, incorporating within itself the welded, cut and folded flaps 11 and realising a container 12 having welded parts 13 incorporated internally of the lateral walls and the bottom thereof, without giving rise to externally-projecting parts.

After forming, a plurality of containers 12 is obtained, each having an opening 5, and all held together in the form of a strip, having connection points 8, 9 and 10. The strip of open containers can be used in a filling station for filling the containers. Alternatively, the connection points 8, 9 and 10 can be cut to obtain single detached containers.

The container 12 made using the process and machine of the invention comprises at least one lateral wall, at least one body, at least one welding seam which runs at least partially internally of the lateral wall and the bottom. The welding seam does not project externally with respect to the container walls. The welding seam is created by the union of two superposed end flaps of two films made of heat-weldable material. The united flaps are superposed one on the other in a tangential lie-plane with respect to the walls (especially the lateral and bottom walls) of the container. This lie-plane of the welded flaps (shown in figure 6) enables, for example with respect to a radial lie-plane, a reduction in the space occupied by the weld seam, offering a better container capacity.

In a further embodiment of the invention, not illustrated, at least a first part of the welding zone surrounding a cell 4 is folded in one direction and a second part in another direction. In particular, preferably the first part of the welding zone is comprised between an uncut connection point 10 situated on the bottom of the container (the bottom is opposite the end with the opening 5) and a connection point 8 situated on a first side of the opening 5, and the second part of the welding zone is comprised between the connection point 10 at the centre of the bottom and a connection point 9 situated at a second side of the opening opposite to the first. In this case the cutting and folding station comprises two punches which act in an opposite direction to each other, one being operatively associated with the first part of the welding zone and the other being operatively associated with the second part of the welding zone.

## Claims

1. A process for forming containers made of a weldable material, comprising the following phases:
supplying at least two reciprocally-facing strips (A and B) of weldable material in an advancement direction (F);
welding the strips at predetermined welding zones in order to create cells (4);
inserting each cell (4) in a forming cavity (71) and expand the cell (4) internally of the forming cavity (71);
**characterised in that** before expanding the cell (4) at least a part of the welding zone at an edge of at least one cell (4) is cut, folded and inserted into the forming cavity (71).

2. The process of claim 1, **characterised in that** at least a part of the welding zone at an edge of the cells (4) is not cut, so that at least one connection point (8, 9, 10) is left between a cell (4) and an immediately adjacent cell (4).

3. The process of claim 2, **characterised in that**:
each cell (4) has at least one opening (5) through which a forming fluid is injected in order to expand the cell (4) internally of the forming cavity (71);
at least two connection points (8, 9) are left at the opening (5) of a cell (4), on opposite sides of the cell (4) opening.

4. The process of claim 2 or 3, **characterised in that**:
each cell (4) has at least one opening (5) through which a forming fluid is injected in order to expand the cell (4) internally of the forming cavity (71);
at least one connection point (10) is left at a side of the cell (4) which side is opposite a side affording the opening (5).

5. The process of any one of the preceding claims, **characterised in that** at least a first part of the welding zone at the edge of a cell (4) is folded in one direction, and at least a second part thereof is folded in an opposite direction thereto.

6. The process of any one of the preceding claims, **characterised in that** at least one part of the welding zone at an edge of the cell (4) is cut and folded at a work station which is also the station at which the cell (4) is preheated.

7. A machine for forming containers made of a weldable material, comprising:
at least one supply line (2) along which at least two reciprocally-facing strips (A and B) of weldable material are advanced in an advancement direction (F);
at least one welding station (3) in which the strips (A and B) are welded at predetermined welding zones to give rise to cells (4);
at least one forming station (7) into which the cell (4) is expanded internally of the forming cavity (71);
**characterised in that** it comprises at least one cutting and folding station (6), predisposed upstream of the forming station, in which at least a part of the welding zones at the edge of the cells (4) are cut and folded.

8. The machine of claim 7, **characterised in that** the cutting and folding station (6) comprises at least one punch (61), mobile on command in a direction (G2) which is transversal to the advancement direction, which punch (61) cooperates with an oppositely-arranged bottom die (62) to cut and fold a welding zone which is at least partially at the edge of a cell (4).

9. The machine of claim 8, **characterised in that** it comprises at least a pair of preheating half-moulds (64), predisposed to heat at least one cell (4) and situated internally of the punch-die pair (61, 62).

10. A container (12) made of a weldable material, comprising at least one lateral wall, at least one bottom and at least one welding line which extends at least partially internally of the walls, **characterised in that** the welding seam is made of a union between two end flaps of the at least one wall superposed one flap on another in a tangential lie-plane with respect to the walls.

## Patentansprüche

1. Verfahren zum Formen von aus einem schweißfähigen Werkstoff hergestellten Behältern, mit den folgenden Schritten:
Bereitstellen von mindestens zwei einander umgekehrt zu weisenden Streifen (A und B) aus einem schweißfähigen Werkstoff in einer Vorschubrichtung (F);
Verschweißen der Streifen in vorbestimmten Schweißzonen zum Erzeugen von Zellen (4);
Einführen einer jeden Zelle (4) in einen Formhohlraum (71) und Expandieren der Zelle (4) im Inneren des Formhohlraums (71);
**dadurch gekennzeichnet, dass** vor dem Expandieren der Zelle (4) mindestens ein Teil der Schweißzone an einem Rand mindestens einer Zelle (4) abgeschnitten, gefaltet und in den Formhohlraum (71) eingeführt wird.

2. Verfahren nach Anspruch 1, **dadurch gekennzeichnet, dass** mindestens ein Teil der Schweißzone an einem Rand der Zellen (4) nicht geschnitten wird, so dass mindestens ein Verbindungspunkt (8, 9, 10) zwischen einer Zelle (4) und einer unmittelbar angrenzenden Zelle (4) verbleibt.

3. Verfahren nach Anspruch 2, **dadurch gekennzeichnet, dass**:
eine jede Zelle (4) mindestens eine Öffnung (5) aufweist, durch die hindurch ein formendes Fluid eingespritzt wird, um die Zelle (4) im Inneren des Formhohlraumes (71) zu expandieren;
mindestens zwei Verbindungspunkte (8, 9) an der Öffnung (5) einer Zelle (4) auf gegenüberliegenden Seiten der Öffnung der Zelle (4) belassen werden.

4. Verfahren nach Anspruch 2 oder 3, **dadurch gekennzeichnet, dass**:
eine jede Zelle (4) mindestens eine Öffnung (5) aufweist, durch die hindurch ein formendes Fluid eingespritzt wird, um die Zelle (4) im Inneren des Formhohlraumes (71) zu expandieren;
mindestens ein Verbindungspunkt (10) auf einer Seite der Zelle (4) belassen wird, die gegenüber der mit der Öffnung (5) versehenen Seite liegt.

5. Verfahren nach einem der vorhergehenden Ansprüche, **dadurch gekennzeichnet, dass** mindestens ein Teil der Schweißzone am Rand der Zelle (4) in einer Richtung gefaltet wird, und mindestens ein zweiter Teil davon in einer dazu entgegengesetzten Richtung gefaltet wird.

6. Verfahren nach einem der vorhergehenden Ansprüche, **dadurch gekennzeichnet, dass** mindestens ein Teil der Schweißzone an einem Rand der Zelle (4) in einer Bearbeitungsstation geschnitten und gefaltet wird, wobei die Bearbeitungsstation zugleich die Station ist, in der die Zelle (4) vorgeheizt wird.

7. Maschine zum Formen von aus einem schweißfähigen Werkstoff hergestellten Behältern, mit:
mindestens einer Versorgungslinie (2), entlang der mindestens zwei einander entgegengesetzt zu weisende Streifen (A und B) aus schweißfähigem Werkstoff in einer Vorschubrichtung (F) vorgeschoben werden;
mindestens einer Schweißstation (3), in der die Streifen (A und B) in vorbestimmten Schweißzonen geschweißt werden, um Zellen (4) zu bilden;
mindestens einer Formstation (7), in der die Zelle (4) im Inneren des Formhohlraumes (71) expandiert wird;
**dadurch gekennzeichnet, dass** sie mindestens eine Schneidund Faltstation (6) aufweist, die stromaufwärts der Formstation angeordnet ist, und in der mindestens ein Teil der Schweißzonen am Rand der Zellen (4) geschnitten und gefaltet werden.

8. Maschine nach Anspruch 7, **dadurch gekennzeichnet, dass** die Schneid- und Faltstation (6) mindesten eine Stanze (61) aufweist, die befehlsgesteuert in einer Richtung (G2) beweglich ist, die quer zur Vorschubrichtung verläuft, wobei die Stanze (61) mit einem gegenüber angeordneten unteren Gesenk (62) zusammenwirkt, um eine Schweißzone zu falten und zu schweißen, die sich mindestens teilweise am Rand der Zelle (4) befindet.

9. Maschine nach Anspruch 8, **dadurch gekennzeichnet, dass** sie mindestens ein Paar vorheizender Formwerkzeughälften (64) aufweist, die zum Vorheizen mindestens einer Zelle (4) vorgesehen und im Inneren des Stanze-Gesenk-Paares (61, 62) angeordnet sind.

10. Behälter (12), hergestellt aus einem schweißbaren Werkstoff, mit mindestens einer seitlichen Wand, mindestens einem Boden und mindestens einer Schweißlinie, die sich mindestens teilweise im Inneren der Wände erstreckt, **dadurch gekennzeichnet, dass** die Schweißnaht aus einer Vereinigung von zwei Endlaschen der mindestens einen Wand hergestellt ist, wobei eine Lasche in einer bezüglich der Wände tangentialen Ebene über der anderen liegt.

## Revendications

1. Procédé de formage de récipients faits d'un matériau soudable, comprenant les phases suivantes :
- fournir au moins deux bandes (A et B) de matériau soudable en vis à vis dans une direction d'avancement (F) ;
- souder les bandes sur des zones de soudure prédéterminées de manière à créer des cellules (4) ;
- insérer chaque cellule (4) dans une cavité de formage (71) et dilater la cellule (4) intérieurement à la cavité de formage (71) ;
***caractérisé en ce qu'***avant la dilatation de la cellule (4), une partie au moins de la zone de soudure sur un bord d'au moins une cellule (4) est découpée, pliée et introduite dans la cavité de formage (71).

2. Procédé selon la revendication 1, ***caractérisé en ce qu'***une partie au moins de la zone de soudure sur un bord des cellules (4) n'est pas découpée de façon à ce qu'au moins un point de connexion (8, 9, 10) soit laissé entre une cellule (4) et une cellule (4) qui lui est immédiatement adjacente.

3. Procédé selon la revendication 2, ***caractérisé en ce que* :**
chaque cellule (4) présente au moins une ouverture (5) à travers laquelle un fluide de formage est injecté en vue de dilater la cellule (4) intérieurement à la cavité de formage (71) ;
au moins deux points de connexion (8,9) sont laissés au niveau de l'ouverture (5) d'une cellule (4), sur des côtés opposés de l'ouverture de la cellule (4).

4. Procédé selon la revendication 2 ou 3, ***caractérisé en ce que* :**
chaque cellule (4) présente au moins une ouverture (5) à travers laquelle un fluide de formage est injecté en vue de dilater la cellule (4) intérieurement à la cavité de formage (71 ) ;
au moins un point de connexion (10) est laissé sur un côté de la cellule (4), lequel côté est opposé à un côté fournissant l'ouverture (5).

5. Procédé selon l'une quelconque des revendications précédentes, ***caractérisé en ce qu'au*** moins une première partie de la zone de soudure sur le bord d'une cellule (4) est repliée dans un sens, et au moins une seconde partie de celle-ci est repliée dans un sens opposé.

6. Procédé selon l'une quelconque des revendications précédentes, ***caractérisé en ce qu'au*** moins une partie de la zone de soudure sur un bord d'une cellule (4) est découpée et repliée dans un poste de travail où la cellule (4) est préchauffée.

7. Machine de formage de récipients faits d'un matériau soudable, comprenant :
au moins une chaîne d'alimentation (2), le long de laquelle au moins deux bandes (A et B), en vis à vis, de matériau soudable, progressent dans une direction d'avancement (F);
au moins un poste de soudage (3) dans lequel les bandes (A et B) sont soudées sur des zones de soudure prédéterminées afin de créer des cellules (4) ;
au moins un poste de formage (7) dans lequel la cellule (4) est dilatée intérieurement à la cavité de formage (71) ;
***caractérisée en ce qu'elle*** comprend au moins un poste de découpage et de pliage (6), prédisposé en amont du poste de formage, dans lequel au moins une partie des zones de soudure sur le bord des cellules (4) est découpée et repliée.

8. Machine selon la revendication 7, ***caractérisée en ce que*** le poste de découpage et de pliage (6) comprend au moins un perforateur (61), mobile sur commande dans une direction (G2) qui est transversale à la direction d'avancement (F), lequel perforateur (61) coopère avec une matrice inférieure disposée en vis-à-vis, pour découper et plier une zone de soudure qui est située au moins partiellement sur le bord d'une cellule (4).

9. Machine selon la revendication 8, ***caractérisée en ce qu'elle*** comprend au moins une paire de demi-moules de préchauffage (64), prédisposés pour chauffer au moins une cellule (4) qui est située intérieurement à la paire perforateur-matrice (61, 62).

10. Récipient (12) fait d'un matériau soudable, comprenant au moins une paroi latérale, au moins un fond et au moins une ligne de soudure qui s'étend au moins partiellement intérieurement aux parois, ***caractérisé en ce que*** le cordon de soudure est fait d'une union entre deux rabats d'extrémité de ladite au moins une paroi, en superposant un rabat sur un autre dans un plan tangentiel aux parois.
